# EUROPEAN PATENT SPECIFICATION

(11) **EP 3 117 115 B1**
(45) Date of publication and mention of the grant of the patent: **25.07.2018**
(21) Application number: 15708173.8
(22) Date of filing: 02.03.2015
(51) Int. Cl.: F16C 33/20, F16C 27/02, F16C 17/02, B60H 1/00, F16C 11/04, F16C 25/04

(54) **ROTARY LEVER ASSEMBLY**
DREHBARE HEBELANORDNUNG
ENSEMBLE LEVIER PIVOTABLE

(30) Priority: 13.03.2014 DE 102014103416
(43) Date of publication of application: 18.01.2017
(73) Proprietor: Valeo Klimasysteme GmbH, 96476 Bad Rodach (DE)
(72) Inventor: WEBER, Jens, 96515 Sonneberg (DE)
(74) Representative: Metz, Gaëlle
(86) International application number: PCT/EP2015/054245
(87) International publication number: WO 2015/135776

(56) References cited:
- WO-A2-03/052283
- DE-A1- 19 546 906
- DE-A1-102009 011 045
- US-A- 5 964 536

## Description

The invention relates to a rotary lever assembly, in particular for a vehicle heating/ventilation or air-conditioning apparatus.

Such rotary lever assemblies serve for the simple mounting of a rotary lever or of a flap in a corresponding bearing. Generally, the tolerance positions here have to be selected in such a manner that play occurs between the rotary lever and the bearing in order to permit a rotation movement of the rotary lever. Due to the play, noise, in particular clattering, occurs during the operation of the vehicle since the rotary lever wobbles in the bearing.

A plain bearing with good dynamic damping properties is known from WO 03/052283 A2.

It is the object of the invention to provide a rotary lever assembly that is simple to realize for vehicle heating/ventilation or air-conditioning apparatus, said rotary lever assembly both permitting smooth-running rotation of the rotary lever and preventing noise from being formed.

The object is achieved by a rotary lever assembly for a vehicle heating/ventilation or air-conditioning apparatus, comprising a rotary lever and a bearing formed in a base body and having a receiving opening for a bearing pin of the rotary lever, the receiving opening having an insertion end for the bearing pin of the rotary lever and being defined by a wall, with part of the wall being formed as a radially flexible tongue which presses against the rotary lever.

By means of the invention, the bearing pin of the rotary lever is fixed radially in the receptacle, and therefore wobbling of the bearing pin, which would lead to clattering, is now no longer possible. At the same time, it is ensured that the rotary lever can easily rotate in the receptacle since the tongue is formed flexibly.

The terms "radially" and "axially" here describe directions with respect to the geometry of the substantially cylindrical receiving opening.

The receiving opening can be designed to be substantially cylindrical, as a result of which the rotary lever assembly can be realized in a simple manner.

In one refinement of the invention, the tongue presses against the bearing pin, and therefore movements of the bearing pin are prevented.

The tongue preferably extends substantially axially towards the insertion end of the receiving opening, as a result of which the bearing pin is immediately fixed at the beginning of the bearing.

For example, the flexible tongue is delimited by two incisions in the wall which extend axially from the insertion end, and therefore the flexible tongue can be realized in a very simple manner.

In one variant embodiment, the free end of the flexible tongue and/or of the wall is formed as a rounded hook extending radially inwards, the free end being the radially innermost section of the tongue and/or of the wall. By means of the formation of the tongue as a hook, the tongue is formed flexibly, the rounding ensures stability at the free end and that always the same point of the tongue bears against the bearing pin, irrespective of the deflection of said tongue.

The free end of the flexible tongue or of the wall is preferably provided with a damper radially on the inside, as a result of which noise formation is prevented by contact of the flexible tongue with the bearing pin.

For example, the damper is made from an elastic material, more particularly is applied to the tongue or to the wall by injection molding, and therefore the damper can be realized in a simple manner.

In one refinement of the invention, the diameter of the receiving opening is partially reduced by the flexible tongue, in particular by the damper, compared with a diameter in the region which does not include a flexible tongue. In this manner, wobbling of the rotary lever assisted by too much play between bearing and bearing pin can be reliably prevented.

In one refinement of the invention, the base body and/or the rotary lever is/are produced by an injection molding method, and therefore they can be produced cost-effectively.

In a variant embodiment, the free end of the bearing pin has a latching hook shaped thereon which engages behind the bearing after insertion of the bearing pin to hold the bearing pin axially in the bearing. The latching hook makes it possible in a simple manner to prevent the rotary lever from being unintentionally detached from the bearing. The free end of the bearing pin here is the end with which the rotary lever is first of all introduced into the bearing.

In one refinement of the invention, the rotary lever is retained axially to the bearing pin by the tongue at the insertion end and by the latching hook at the opposite end, the tongue being adapted to be axially contacted by the rotary lever, in particular by a swivel arm of the rotary lever, and the latching hook being adapted to be axially contacted by the bearing, and therefore the position of the rotary lever, in particular that of the bearing pin in the bearing, is precisely determined and the rotary lever is fixed in this position. The latching hook can engage here behind the wall of the bearing.

Further features and advantages of the invention emerge from the description below and from the attached drawings to which reference is made. In the drawings:
- figure 1 shows a rotary lever assembly according to the invention schematically in section, and
- figure 2 shows a perspective view of the bearing of a rotary lever assembly according to the invention.

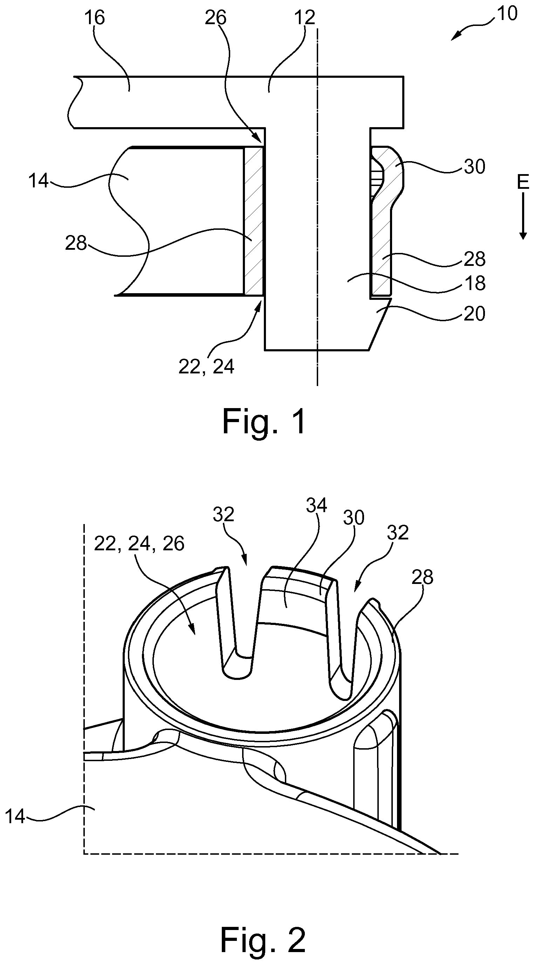

Figure 1 illustrates a rotary lever assembly 10 for a vehicle heating/ventilation or air-conditioning apparatus. The rotary lever assembly 10 has a rotary lever 12 and a base body 14.

Both the rotary lever 12 and the base body 14 can be produced by an injection molding method.

The rotary lever 12 has a swivel arm 16 and a bearing pin 18 which, for example, are formed integrally. The bearing pin 18 here can extend perpendicularly from the swivel arm 16.

In addition, a latching hook 20 can be provided at that end of the bearing pin 18 which faces away from the swivel arm 16, i.e. at its free end, the latching hook extending radially outward from the bearing pin 18.

It is conceivable for the entire rotary lever 12 to be formed integrally.

A bearing 22 having a substantially cylindrical receiving opening 24 is formed in the base body 14.

The receiving opening 24 has an insertion end 26 and is defined by a wall 28.

Part of the wall 28 is formed as a flexible tongue 30.

Outside the tongue 30, the wall 28 is formed with a slight excess size on the inside in comparison to the outside diameter of the bearing pin 18.

The tongue 30 extends here substantially axially with respect to the bearing 22 towards the insertion end 26 of the receiving opening 24.

The free end of the tongue 30, that is to say, that section of the tongue 30 which is the radially innermost section, is formed as a rounded hook extending radially inwards.

For this purpose, the tongue 30 can initially extend radially outward and then extend radially inward in a curve in order to form the hook.

The flexibility of the tongue 30 is increased by the hook.

As can be seen in figure 2, at least two incisions 32 extend axially from the insertion end 26 in the wall 28. The incisions 32 delimit the tongue 30.

In the embodiment illustrated, the free end of the tongue 30 is provided with a damper 34 radially on the inside, wherein the damper 34 can be made from an elastic material. For example, the damper is applied to the tongue 30 by injection molding.

The wall 28 can likewise be provided with a damper.

By means of the flexible tongue, in particular by means of the damper 34, which is arranged on the flexible tongue 30, the diameter of the receiving opening is partially reduced compared with the diameter of the receiving opening 24 in a region which does not include a flexible tongue 30.

In the mounted rotary lever assembly 10, the bearing pin 18 of the rotary lever 12 is arranged in the bearing 22, i.e. in the receiving opening 24.

The swivel arm 16 of the rotary lever 12 lies here on that side of the base body 14 which has the insertion end 26 of the receiving opening 24.

For the mounting, the bearing pin 18 is first of all introduced by the free end thereof through the insertion end 26 of the receiving opening 24 in insertion direction E. The tongue 30 is moved radially outward here and is therefore tensioned.

The tongue 30 therefore presses in the radial direction against the bearing pin 18 and prevents radial movements and wobbling of the entire rotary lever 12.

Since the tongue 30 is a part cut out from the cylindrical wall 28, the tongue 30 circumferentially also embraces part of the bearing pin, and therefore at least a linear contact arises in the circumferential direction.

The necessary tensioning of the tongue 30 is achieved when the bearing pin 18 is introduced into the receiving opening 24 since the diameter of the bearing pin 18 is selected to be larger than the diameter of the receiving opening 24 in the region of the flexible tongue 30 in the unmounted state. That is to say, the unloaded tongue 30 is positioned angled radially inward.

In the case in which a latching hook 20 is provided on the bearing pin 18, the rotary lever 12 is inserted into the bearing 22 until the latching hook 20 engages behind the wall 28 of the base body 14.

For simplified mounting, the latching hook 20 can also be of flexible or elastic design.
The latching hook 20 thus secures the rotary lever 12 and holds the bearing pin 18 axially in the bearing 22 since a movement of the rotary lever 12 counter to the insertion direction E is prevented by the latching hook 20.

At the opposite end of the bearing pin 18, the rotary lever 12 is also secured in the axial direction by the tongue 30. For this purpose, the tongue 30 is adapted to be axially contacted by the rotary lever 12, in particular by the swivel arm 16, and therefore the rotary lever 12 is not displaceable further in the insertion direction E.

## Claims

1. A rotary lever assembly for a vehicle heating/ventilation or air-conditioning apparatus, comprising a rotary lever (12) and a bearing (22) formed in a base body (14) and having a receiving opening (24) for a bearing pin (18) of the rotary lever (12), the receiving opening (24) having an insertion end (26) for the bearing pin (18) of the rotary lever (12) and being defined by a wall (28), with part of the wall (28) being formed as a radially flexible tongue (30) which presses against the rotary lever (12).

2. The rotary lever assembly according to claim 1, **characterized in that** the receiving opening (24) is substantially cylindrical.

3. The rotary lever assembly according to claim 1 or 2, **characterized in that** the tongue (30) presses against the bearing pin (18).

4. The rotary lever assembly according to any of the preceding claims, **characterized in that** the tongue (30) extends substantially axially towards the insertion end (26) of the receiving opening (24).

5. The rotary lever assembly according to claim 4, **characterized in that** the flexible tongue (30) is delimited by two incisions (32) in the wall (28) which extend axially from the insertion end (26).

6. The rotary lever assembly according to any of the preceding claims, **characterized in that** the free end of the flexible tongue (30) and/or of the wall (28) is formed as a rounded hook extending radially inwards, the free end being the radially innermost section of the tongue (30) and/or of the wall (28).

7. The rotary lever assembly according to any of the preceding claims, **characterized in that** the free end of the flexible tongue (30) or of the wall (28) is provided with a damper (34) radially on the inside.

8. The rotary lever assembly according to claim 7, **characterized in that** the damper (34) is made from an elastic material, particularly is applied to the tongue (30) by injection molding.

9. The rotary lever assembly according to any of the preceding claims, **characterized in that** the diameter of the receiving opening (24) is partially reduced by the flexible tongue (30), in particular by the damper (34), compared with a diameter in the region which does not include a flexible tongue (30).

10. The rotary lever assembly according to any of the preceding claims, **characterized in that** the base body (14) and/or the rotary lever (12) is/are produced by an injection molding method.

11. The rotary lever assembly according to any of the preceding claims, **characterized in that** the free end of the bearing pin (18) has a latching hook (20) shaped thereon which engages behind the bearing (22) after insertion of the bearing pin (18) to hold the bearing pin (18) axially in the bearing (22).

12. The rotary lever assembly according to claim 11, **characterized in that** the rotary lever (12) is retained axially to the bearing pin (18) by the tongue (30) at the insertion end (26) and by the latching hook (20) at the opposite end, the tongue (30) being adapted to be axially contacted by the rotary lever (12), in particular by a swivel arm (16) of the rotary lever (12), and the latching hook (20) being adapted to be axially contacted by the bearing (22).

## Patentansprüche

1. Drehbare Hebelanordnung für eine Fahrzeugheizungs-/lüftungs- oder -klimavorrichtung, umfassend einen drehbaren Hebel (12) und ein Lager (22), das in einem Basiskörper (14) ausgebildet ist und eine Aufnahmeöffnung (24) für einen Lagerbolzen (18) des drehbaren Hebels (12) aufweist, wobei die Aufnahmeöffnung (24) ein Einsetzende (26) für den Lagerbolzen (18) des drehbaren Hebels (12) aufweist und durch eine Wand (28) festgelegt ist, wobei ein Teil der Wand (28) als eine radial flexible Zunge (30) ausgebildet ist, die gegen den drehbaren Hebel (12) drückt.

2. Drehbare Hebelanordnung nach Anspruch 1, **dadurch gekennzeichnet, dass** die Aufnahmeöffnung (24) im Wesentlichen zylindrisch ist.

3. Drehbare Hebelanordnung nach Anspruch 1 oder 2, **dadurch gekennzeichnet, dass** die Zunge (30) gegen den Lagerbolzen (18) drückt.

4. Drehbare Hebelanordnung nach einem der vorhergehenden Ansprüche, **dadurch gekennzeichnet, dass** sich die Zunge (30) im Wesentlichen axial zu dem Einsetzende (26) der Aufnahmeöffnung (24) erstreckt.

5. Drehbare Hebelanordnung nach Anspruch 4, **dadurch gekennzeichnet, dass** die flexible Zunge (30) durch zwei Einschnitte (32) in der Wand (28) abgegrenzt ist, die sich axial von dem Einsetzende (26) weg erstrecken.

6. Drehbare Hebelanordnung nach einem der vorhergehenden Ansprüche, **dadurch gekennzeichnet, dass** das freie Ende der flexiblen Zunge (30) und/oder der Wand (28) als gerundeter Haken ausgebildet ist, der sich radial nach innen erstreckt, wobei das freie Ende der radial innerste Abschnitt der Zunge (30) und/oder der Wand (28) ist.

7. Drehbare Hebelanordnung nach einem der vorhergehenden Ansprüche, **dadurch gekennzeichnet, dass** das freie Ende der flexiblen Zunge (30) oder der Wand (28) radial auf der Innenseite mit einer Dämpfungseinrichtung (34) versehen ist.

8. Drehbare Hebelanordnung nach Anspruch 7, **dadurch gekennzeichnet, dass** die Dämpfungseinrichtung (34) aus einem elastischen Material hergestellt ist, insbesondere durch Einspritzformen an der Zunge (30) angebracht ist.

9. Drehbare Hebelanordnung nach einem der vorhergehenden Ansprüche, **dadurch gekennzeichnet, dass** der Durchmesser der Aufnahmeöffnung (24) zum Teil durch die flexible Zunge (30), insbesondere durch die Dämpfungseinrichtung (34), im Vergleich zu einem Durchmesser in dem Bereich, der keine flexible Zunge (30) umfasst, reduziert ist.

10. Drehbare Hebelanordnung nach einem der vorhergehenden Ansprüche, **dadurch gekennzeichnet, dass** der Basiskörper (14) und/oder der drehbare Hebel (12) durch ein Einspritzformungsverfahren hergestellt sind/ist.

11. Drehbare Hebelanordnung nach einem der vorhergehenden Ansprüche, **dadurch gekennzeichnet, dass** das freie Ende des Lagerbolzens (18) einen daran angeformten Rasthaken (20) aufweist, der das Lager (22) nach dem Einsetzen des Lagerbolzens (18) hintergreift, um den Lagerbolzen (18) axial in dem Lager (22) zu halten.

12. Drehbare Hebelanordnung nach Anspruch 11, **dadurch gekennzeichnet, dass** der drehbare Hebel (12) durch die Zunge (30) an dem Einsetzende (26) und durch den Rasthaken (20) an dem gegenüberliegenden Ende axial an dem Lagerbolzen (18) gehalten ist, wobei die Zunge (30) geeignet ist, axial von dem drehbaren Hebel (12), insbesondere von einem Schwenkarm (16) des drehbaren Hebels (12), berührt zu werden, und der Rasthaken (20) geeignet ist, axial von dem Lager (22) berührt zu werden.

## Revendications

1. Ensemble levier pivotable pour un appareil de chauffage/ventilation ou de climatisation de véhicule, comprenant un levier pivotable (12) et un palier (22) formé dans un corps de base (14) et ayant une ouverture de réception (24) pour une broche de palier (18) du levier pivotable (12), l'ouverture de réception (24) ayant une extrémité d'insertion (26) pour la broche de palier (18) du levier pivotable (12) et étant définie par une paroi (28), une partie de la paroi (28) étant formée comme une languette radialement flexible (30) qui appuie contre le levier pivotable (12).

2. Ensemble levier pivotable selon la revendication 1, **caractérisé en ce que** l'ouverture de réception (24) est sensiblement cylindrique.

3. Ensemble levier pivotable selon la revendication 1 ou 2, **caractérisé en ce que** la languette (30) appuie contre la broche de palier (18).

4. Ensemble levier pivotable selon l'une quelconque des revendications précédentes, **caractérisé en ce que** la languette (30) s'étend sensiblement axialement vers l'extrémité d'insertion (26) de l'ouverture de réception (24).

5. Ensemble levier pivotable selon la revendication 4, **caractérisé en ce que** la languette flexible (30) est délimitée par deux incisions (32) dans la paroi (28) qui s'étendent axialement à partir de l'extrémité d'insertion (26).

6. Ensemble levier pivotable selon l'une quelconque des revendications précédentes, **caractérisé en ce que** l'extrémité libre de la languette flexible (30) et/ou de la paroi (28) est formée comme un crochet arrondi s'étendant radialement vers l'intérieur, l'extrémité libre étant la section radialement la plus intérieure de la languette (30) et/ou de la paroi (28).

7. Ensemble levier pivotable selon l'une quelconque des revendications précédentes, **caractérisé en ce que** l'extrémité libre de la languette flexible (30) ou de la paroi (28) comprend un amortisseur (34) radialement à l'intérieur.

8. Ensemble levier pivotable selon la revendication 7, **caractérisé en ce que** l'amortisseur (34) est en un matériau élastique, en particulier est appliqué sur la languette (30) par moulage par injection.

9. Ensemble levier pivotable selon l'une quelconque des revendications précédentes, **caractérisé en ce que** le diamètre de l'ouverture de réception (24) est partiellement réduit par la languette flexible (30), en particulier par l'amortisseur (34), par rapport à un diamètre dans la région qui ne comprend pas de languette flexible (30).

10. Ensemble levier pivotable selon l'une quelconque des revendications précédentes, **caractérisé en ce que** le corps de base (14) et/ou le levier pivotable (12) est/sont produits par un procédé de moulage par injection.

11. Ensemble levier pivotable selon l'une quelconque des revendications précédentes, **caractérisé en ce que** l'extrémité libre de la broche de palier (18) a un crochet de verrouillage (20) formé sur celle-ci qui vient en prise derrière le palier (22) après insertion de la broche de palier (18) pour maintenir la broche de palier (18) axialement dans le palier (22).

12. Ensemble levier pivotable selon la revendication 11, **caractérisé en ce que** le levier pivotable (12) est retenu axialement sur la broche de palier (18) par la languette (30) au niveau de l'extrémité d'insertion (26) et par le crochet de verrouillage (20) au niveau de l'extrémité opposée, la languette (30) étant conçue pour être en contact axial avec le levier pivotable (12), en particulier un bras pivotant (16) du levier pivotable (12), et le crochet de verrouillage (20) étant conçu pour être en contact axial avec le palier (22) .
